# NEW EUROPEAN PATENT SPECIFICATION

(11) **EP 2 237 952 B2**
(45) Date of publication and mention of the opposition decision: **31.05.2017**
(45) Mention of the grant of the patent: 26.09.2012
(21) Application number: 07835595.5
(22) Date of filing: 28.08.2007
(51) Int. Cl.: B32B 27/08, B32B 27/32, C08J 7/04, B29C 59/10, B32B 27/36

(54) **IN-LINE COATED BIAXIALLY ORIENTATED POLYPROPYLENE BASED ANTISTATIC MULTILAYER FILMS**
INLINE-BESCHICHTETE ANTISTATISCHE MEHRLAGIGE FILME AUF BASIS VON BIAXIAL AUSGERICHTETEM POLYPROPYLEN
FILMS MULTICOUCHES ANTISTATIQUES À BASE DE POLYPROPYLÈNE À ORIENTATION BIAXIALE REVÊTUS À LA CHAÎNE

(43) Date of publication of application: 13.10.2010
(73) Proprietor: Super Film Ambalaj Ve Sanayi Ve Ticaret A.S., 27120 Gaziantep (TR)
(72) Inventor: KILECI, Mehmet Necdet, 27120 Gaziantep (TR); SELBASTI, Turgut, 27120 Gaziantep (TR); RZAYEV, Zakir, Prof. Dr., 06532 Ankara (TR); GENC, Mehmet Hayri, 27120 Gaziantep (TR); TILFARLIGIL, Sibel, 27120 Gaziantep (TR)
(74) Representative: Awapatent AB
(86) International application number: PCT/TR2007/000083
(87) International publication number: WO 2009/029058

(56) References cited:
- EP-A- 0 092 791
- EP-A- 0 621 667
- EP-A- 0 862 086
- EP-A- 0 909 637
- EP-A- 1 047 165
- EP-A- 1 275 684
- EP-A1- 1 408 069
- EP-A2- 0 214 790
- WO-A-99/04411
- WO-A-99/07553
- WO-A-02/083414
- WO-A-2007/022463
- DE-A1- 1 569 450
- DE-A1- 1 569 450
- GB-A- 1 295 536
- JP-A- 9 176 604
- JP-A- 10 058 622
- TR-A2- 200 002 164
- US-A- 3 753 769
- US-A- 5 188 867
- US-A- 5 834 098
- US-A1- 2005 249 963
- US-B1- 6 217 687
- US-B2- 6 979 495

## Description

### FIELD OF THE INVENTION

The present invention relates to the field of plastic fabrication and uses. More specifically, the present invention relates to in-line coated or multilayered polyolefin films that exhibit improved surface properties such as excellent antistatic, cold-seal adhesion, slipperness, wetting tension, printability and adhesion to different lamination glues.

### BACKGROUND OF INVENTION (STATE OF THE ART)

It is known that many thermoplastic polymer packaging materials, such as films, sheets, coatings, foams, and the like, exhibiting suitable flexibility and mechanical strength have a wide range of application areas in food and non-food industry such as food packaging, agriculture, industrial wrapping applications, medicine, pharmacy, electrical and electronical material industry, and the like.

The several goals of these materials, especially packaging films, including biaxially oriented polyolefin films, are: (1) to have required surface properties such as antistatic, wetting tension, adequate adhesion and slipperness during their exploitation in various conditions, (2) to ensure that the films retain their optical (haze, gloss, opacity, etc.) and thermal properties (heat-sealability, etc.) (3) to ensure that the films retain their tensile and mechanical properties needed for the specified applications.

Currently, antistatic films are produced by adding additives in masterbatch form into the film during extrusion or by coating the film offline after production with various types of organic antistatic additives such as ethoxylated amines, polyimines, and the like, containing positive charged ions in their molecules, to prepare the conventional film-forming thermoplastic polymers, such as polyolefins, flexible poly(vinyl chloride), styrene polymers, polyesters, functional copolymers of α-olefins, and the like.

There are a number of available patent publications related to in-line coated thermoplastic films, antistatic polyolefin thin films, white cavitated heat-sealable or non heat-sealable biaxially oriented polypropylene films containing various types of organic and inorganic additives, such as polyethylene glycol and its stearyl ether, fatty acid monoester of polyhydric alcohol, monoglyceride of fatty acid, alcohol esters and amides or metal salts of either saturated or unsaturated monocarboxylic fatty acids, low and high molecular weight amine and imine compounds, inorganic fillers and pigments, silica and organic antiblocking agents, and the like. Fatty acid esters, ethoxylated alkylamines, diethanolamides and ethoxylated alcohol are conventional non-ionic antistatic agents predominantly used in polyolefin film compositions.

More specifically, thermoplastic resin film laminate with antistatic property, such as disclosed in US Pat. 4605591, relate to a polyester film and a layer of polyester resin composition provided on at least one surface of the film, said composition comprising (A) a water insoluble polyester copolymer of mixture of the aliphatic or alicyclic dicarboxylic acids and its metal sulfonate derivatives (sulphophthalic acid and its isostructural analogues) with aliphatic glycols with C₂₋₈ and and alicyclic glycols with C₂₋₈ and (B) inorganic inert particles such as calcium carbonate fine, kaolin, bentonite, zeolite and the like (the weight ratio of (A)/(B) = 100/0.5-3.0); taking transparency and slipperiness into consideration, this patent invention preferred use of natural and synthetic silicic acids. The composition also contained one or more ingredients selected from the group consisting of a water soluble silicone, a polyfunctional reactive compound, a poly(ethylene glycol) and its derivative (0.1-15 wt. %) and a antistatic agent. This film laminate preferably produced by in-line coating method.

Though this invention recommended the possibility of production film laminate using other non-polar thermoplastic polymers, especially polyolefins, but this method is not applicable to polyolefins (polyethylene, polypropylene and copolymers of α-olefins) that surface of films of said polymers is strong hydrophobic and formation of thin coatings from polar monomer system in their surface is not possible without preliminary surface treatments (corona, plasma, flame and chemical treatments). Polyester laminate film according to this invention is a melt extruded, unoriented or uniaxially oriented and non-mono or multilayered film and the resulting laminate is further uniaxially or biaxially oriented.

In EP Pat. 0505861 A2, there is disclosed a laminated film comprising from 3-300 µm polyester film and at least one 0.01-5.0 µm coating layer on one or both surface of said polyester film. Coating thin film contained (a) polymer having cationic nitrogen atom in main chain thereof, (b) a binder polymer selected from the group consisting of polyesters, polyacrylated, polyurethanes, chlorine-containing polymers and mixtures thereof, (c) a material selected from the group consisting of particles, lubricants and mixtures thereof, and (d) a crosslinker selected from the group consisting of melamine or epoxy crosslinking agents and their mixtures. Said coating film formed by an in-line coating method. This laminated film is mono- or biaxially oriented which is excellent in an antistatic property, adhesion and slipperness. EP Pat. 0172269 A2 is disclosed a copolyester thermoplastic resin film laminate comprising (A) a water insoluble polyester copolymer which contained a mixtured dicarboxylic acid component with metal sulfonate group and a glycol component and (B) inert particles; the weight ratio of (A)/(B) = 100/0.5-3.0. Composition of film contained a water soluble silicone, a polyfunctional reactive compound, a poly(ethylene glycol) and its derivative and phosphoric acid derivatives as the antistatic agents. Copolyester laminate film preferably produced by in-line coating. According to EP Pat. 0362568A2, the antistatic polyester film is useful in various applications including magnetic recording media, graphic arts, display, packing materials, building materials and so on. Several patent publications related to improve adhesion between surface of basic polymeric film and the surface of coating by using various polymeric compositions for coating solutions. Such coatings include compositions based on poly(ethylene imine) (US Pat. 5156904), acrylic or methacrylic thermosets (US Pat. 4571363), crosslinked styrene-maleic anhydride copolymer (US Pat. 4410600), vinylidene chloride copolymer (US Pat. 2698240), water dispersible copolyesters (US Pat. 5156904) and like polymeric coatings. Among said coatings, poly(ethylene imine) is most used an coating ingredient between various ionomeric and non-ionomeric thermoplastic films such as polyester or cellophane/polyethylene (US Pat. Reissue No. 28554), polypropylene/other polymers (US Pat. 4139643), and like polymer systems. Oriented polymeric films, preferably polyethylene terephthalate, coated with poly(ethylene imine) and/or polyamido-poly(ethylene imine) are disclosed in US Pat. 5156904 and US Pat. 5453326, respectively, in which the poly(ethylene imine) is coated by in-line method i.e., during the film manufacturing process the polymeric film is formed before heat setting the film. In-line coated film, when used to make a laminate with other polymers such as polyethylene or ionomer type polymers, showed no signs of delamination between the basic polymeric film and the extrusion coated polymer after 2 hours in water at 121°C at 0.1 N/mm² (US Pat. 5156904 and EP Pat. 0458147A2). Oriented polyethylene terephthalate film is in-line coated with polyamido-poly(ethylene imine) to improve the antistatic properties of film and its utilization for other packaging applications (US Pat. 5453326). In-line poly(ethylene imine) coated film used to make a laminate with other non-ionomer or ionomer type of polymers such as polyethylene or polyester, preferable polyethylene terephthalate (EP Pat. 0458147A2). However, above mentioned patent inventions related to preparation of laminated film only using monolayer polymer matrix film and a group of polymeric antistatic agents containing complexes of cationic nitrogen-containing polymer, preferably water-soluble poly(ethylene imine), with HCl or HBr acids. But it is well known that using inorganic acidic components in poly(ethylene imine) complexes exhibit some difficulties in processing such as corrosion of metallic parts of the machinery and environmental problems since these components evaporate during film forming process.

It is well known that many acrylic and methacrylic polymers [Maltzer Y. L. Water-soluble polymer, Noves Data Co.: New Jersey, USA, 1981] and copolymers of maleic anhydride and its isostructural analogues (citraconic and itaconic anhydrides, amides, esters and imides) [Triverdi B. C., Culberton B.M. Maleic anhydride, Plenum Press: New York, 1982; Rzaev Z. M. O. Polymers and copolymers of maleic anhydride, Elm: Baku, 1984; Rzaev Z. M. O. Prog. Polym. Sci., 2000;25:163; Rzaev Z. M. O. et al. Eur. Polym. J. 2002;38:2143] widely used as the effective ingredient in the water-soluble or dispersed film-forming compositions which are also useful for the producing the surface coatings on various thermoplastic polymers, preferably on polar polymer systems using in-line coating processing. For example, US Pat. 4410600 is disclosed a biaxially oriented aromatic polyester film coated by an in-line method with a crosslinked functional poly(styrene-co-maleic anhydride) copolymer before heat setting; the coated said copolymer film still requires corona treatment prior to extrusion coating by a converter. Number of publications relating to the use of said water-soluble functional polymer film-forming systems for coating of polyolefin film surface is significantly limited with the use of (meth)acrylic type of polymer compositions while for the anhydride-containing copolymers and their various compositions, any publication, including patent publications, almost are absenced.

Several Japan patent publications also related to coated thermoplastic polymers, preferably polyester type polymers, in which antistatic layer coated on at least the single surface of basic films. Used antistatic resin prepared by copolymerization of a component having a side chain polyalkylene oxide with a component having a quaternary ammonium group. Coated antistatic layer is stretched at least of uniaxially (JP Pat. 2003-136641). JP Pat. 2002-012858 is disclosed a method to improve an antistatic properties of a thermoplastic film by using antistatic agent exhibiting an excellent antistatic behavior under low humidity, capable of providing an antistatic film excellent in color tone, and provide a coat-type antistatic film, as well as a method of preparing the coat-type antistatic film by an in-line coating method. Antistatic agent comprised (1) a compound including a sulfonic acid or its salt in the molecule and (2) a polymer including a cationic group. Subject of other patent (JP Pat. 2001-026088) is to improve adhesiveness, printability and other characteristics by providing an easy wettable coating film layer on the single surface of a polyester film and setting the wetting tension of the other surface of the polyester film to a specific value (45 mN/m or more). As a method for forming the coating film layer, an in-line coating method wherein a coating agent is applied to the polyester film before orientation/crystallization is completed and the coated film is stretched at least unidirectionally to be formed coated film preferable 0.001-1.0 µm. Patent invention (JP Pat. 2004-345298) is disclosed a polyester film for heat-shrinkable packaging which is excellent in solvent bonding properties and has enough solvent bonding properties even if an antistatic coating film is applied by an in-line coated method. JP Pat. 5320391 is related to the easily coated polyester improved in electrostatic property and characterized by disposing a primer layer comprising a composition containing (1) an easily adhesive polyester resin, (2) an antistatic agent having a sulfonic acid group and/or its metal salt group in the molecule and (3) an acidic compound having a least one free carboxylic group or phenolic hydroxyl group on at least one side of a polyester film, and the method for producing the film by an in-line coating method. Purpose of JP 6293875 invention is to obtain a coating agent having excellent slip properties and blocking resistance to a copolyester film and exhibiting adhesiveness to various coating materials by compounding a water soluble copolyester and acrylic resin. This invention provides a polyester film coated with the coating agent dispersed in water and manufacturing method of this film by an in-line technique. JP Pat. 6099559 disclosed a polyester film useful as a base film such as film-processed product like a magnetic recording medium, an X-ray photographic film, a telephone card, a diazo microfilm, etc., having excellent adhesive properties, blocking resistance and smoothness. This polyester based film is comprised a coating layer formed of water dispersive or soluble acrylic resin, fine inorganic particles (size of 0.2 µm). Coating layer of this film is prepared by an in-line coating method. Tsunashima et al. (Toray Ind.) (JP Pat. 11198228) developed the in-line coating method for the water soluble coating materials or the like having good productivity and quality such as without thickness irregularities during a film making process, and also allowing to form a simultaneously biaxially oriented film with orientation speed of 10 ± 4 %/min or more in both the longitudinal direction and lateral direction. Obtained by this method oriented film includes a coating material layer having a thickness 0.005-05 µm on the film surface.

However, these patent inventions predominantly comprised polyester type basic polymers and adhesive polyester or acrylic resin, and films prepared are not mono or multilayered. All the methods including developed in said patents are not applicable to hydrophobic polyolefin films, especially to polypropylene mono or multilayered and biaxially oriented films. On the other hand, any patent information about polypropylene and acrylic composition based film laminates having a combination of useful properties such as excellent antistatic, antiblocking, physico-mechanical properties and other important parameters is only limited by proposal informations without detailed experimental and prototype technological results.

As evident from the above described patent publications, there is relatively small publications describing polyolefin based, in particular, polyolefin based in-line surface coated films. All of the patent publications suffer from one or more of the following properties, such as film compositions are not mono or multilayered, not biaxially oriented polypropylene based, not heat sealable or neither cavitated nor colored with having combination of excellent properties of antistatic behavior with antiblocking, slipping, improved wetting tension, cold seal and adhesive adhesion capability, and like, to be retained on prolonged time periods.

### BRIEF DESCRIPTION OF THE DRAWINGS

FIG. **1** is a schematic representation of the formation of self-assembled hyperbranched positive charges macrocomplexes as an effective antistatic agents.
FIG. **2** is a general scheme for the production and processing technology of the disclosed films with revised and improved in-line chemical coated unit.

### SUMMARY OF THE INVENTION

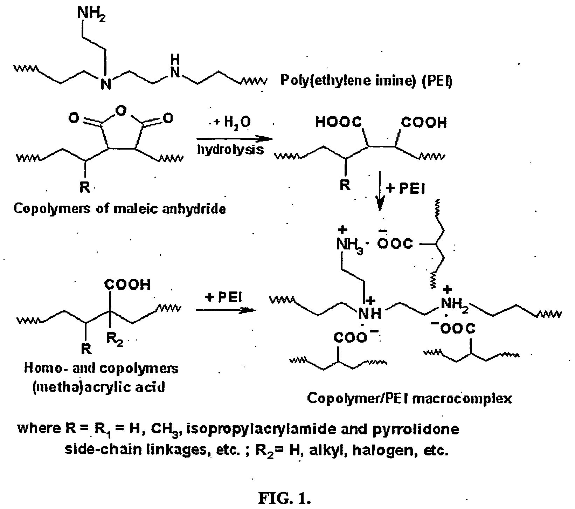

It is an object of the present invention to design and prepare a multilayered structure, preferable A/B/C/D/E structure having at least a thin antistatic coated skin (A) layer, two inner (B) and (D) layers, a basic core (C) layer and an outer (E) layer for biaxially oriented polyolefin based, preferably polypropylene based films exhibiting advantageous properties such as antistatic, antiblocking, slipperness, cavitated, non-heat sealable or heat-sealable and improved wetting tension properties, as compared with known and commercial polypropylene based films with similar compositions. To improve antistatic properties of films, composition of (A) skin coated layer contains a mixture of crosslinkable copolymers maleic anhydride and its isostructural analogues and ionic antistatic agent on the base of the complexed binary systems such as linear or branched poly(ethylene imine) (PEIs)/ oligo(acrylic acid) and (meth)acrylic copolymers or PEIs/water soluble copolymers of maleic anhydride [poly(MA-co-comonomer)] with different comonomers, preferable with ethylene, propylene, N-isopropylacrylamide, N-vinyl-2-pyrrolidone and like comonomers (Fig. 1), polypropylene homopolymer, donor-acceptor or hydrogen bonding interaction in used combination of binary systems in composition of said layer providing significantly increase of positive charge in primary, secondary and tertiary amine groups, and therefore exhibiting excellent antistatic properties. It is known fact that the hydrolyzed anhydride containing copolymers with strong hydrogen bonding structure easily form assembled macrocomplexes with PEI through -COO-. ⁺NH- noncovalent interaction between free carboxylic groups of acidic unit and PEI amine groups (Rzaev Z. M. O. et al. J Appl. Polym. Sci. 2007;102:5841) Two inner (B) and (D) layers of said mono or multilayered structure is comprised 100 % of polypropylene or the mixture of polypropylene with poly(ethylene-co-propylene) copolymer or poly (ehylene-co-propylene-co-butylene) terpolymer or polypropylene, TiO₂ white masterbatch for producing a sold white BOPP film, slip/antistatic masterbatch and CaCO₃ masterbatch for producing a white cavitated BOPP film. (C) core layer with similar composition as in (B) and (D) layers is comprised of polypropylene or slip/non-ionic antistatic masterbatch and CaCO₃ or TiO₂ white masterbatch. Outer layer (E) is comprised of polypropylene or poly(ethylene-co-propylene)
US Patent No. 6,979,495 discloses a biaxially oriented multi-layer film which comprises a core layer comprising: a syndiotactic propylene homopolymer; and at least one additional layer adjacent to the core layer comprising a polymer which is an ethylene or propylene homopolymer, ethylene copolymer or terpolymer containing comononers of propylene and/or butane-1.
copolymer or poly(ehylene-co-propylene-co-butylene) terpolymer, silica and organic antiblocking masterbatches, and slip/non-ionic antistatic masterbatch. Outer layer (E) can be treated with corona discharge, plasma or flame methods or can be nontreated depending on final usage of the film. Compositions and layer component compositions for various types of polypropylene based film with coated surface layer of the present invention were presented below with examples and in the Tables.

Further multilayered films that are based on polypropylene are known from WO 99/07553 and TR 2000 02164 A2.

The present invention is an surface coated antistatic film that is a multilayered, biaxially oriented and made from polyolefin based, preferably polypropylene and poly(ethylene-co-propylene-co-butylene) terpolymers [poly(E-co-P-co-B)s] with different content of E- and B-units. Thin surface coating with thickness around 0.05-2.0 µm made (a) from a mixture of polyethylene glycol (PEG) crosslinked copolymers maleic anhydride and its isostructural analogues and ionic antistatic agent on the base of the complexed binary systems such as linear or branched poly(ethylene imine) (PEIs)/ oligo(acrylic acid) and (meth)acrylic copolymers or PEIs/water soluble copolymers of maleic anhydride (poly(MA-co-comonomer) with different comonomer, preferable with ethylene, propylene, N-isopropylacrylamide, N-vinyl-2-pyrrolidone and like comonomers and (b) from one of the conventional acrylic adhesive compositions (Rogers Int. Inc., Greenville, SC, USA) that modified with said polymer/polymer binary complexed system as an antistatic agent. The invented surface coated antistatic multilayer films are produced by a improved technology of production, processing and in-line coating. The present invention is useful for the food packaging and agricultural applications as well as for other general packaging and nonconventional special applications.

The following examples of the present invention for preparation of multilayered and surface coated antistatic polypropylene based films having different compositions, properties are illustrated.

### EXAMPLE 1 - disclosing a product outside the scope of protection of the present invention for better understanding of the field

A first example of a in-line surface coated multilayer film (A/B/C/D/E) having excellent antistatic properties comprises: (A) 0.1 µm surface corona treated and in-line coated onto surface of 0.9 µm skin layer containing 90 % by weight of propylene homopolymer, 10 % by weight of mixture of acrylic matrix polymer and ionic antistatic agent on the base of the complexed binary systems such as linear or branched poly(ethylene imine)s PEIs [LPEI or (BPEI)/oligo(acrylic acid)], (B) 2.0 µm inner layer containing 100 % by weight of polypropylene, (C) 22.0 µm core layer containing 100 % by weight of polypropylene, (D) 2.0 µm inner layer containing 100 % by weight of polypropylene, (E) 1.0 µm surface corona treated outer layer containing 98,5 % by weight of polypropylene. Before biaxially stretching and in-line coated, skin layer (A) has twice corona or flame treatments in order to provide the better adhesion between polypropylene based matrix polymer surface and acrylic based in-line coated system. Outer layer (E) is also corona or flame treated for further printing and labelling purposes. The film prepared by using the flat tenter twin-screw extrusion system with excellent mixing and simultaneous or sequential stretching capacity, supplied with a chilled corona and an improved in-line coating system for the effective surface modification/hydrophilization of films, three or four satellite co-extruders, flat die, chill roll, water vaporization and recycling lines.

### EXAMPLE 2 - disclosing a product outside the scope of protection of the present invention for better understanding of the field

A second example of a in-line surface coated multilayer film (A/B/C/D/E) having excellent antistatic properties comprises: (A) 0.1 µm surface corona treated and in-line coated onto surface of 0.9 µm skin layer containing 90 % by weight of propylene homopolymer or poly(ehylene-co-propylene-co-butylene) terpolymer, 10 % by weight of mixture of acrylic matrix polymer and ionic antistatic agent on the base of the complexed binary systems such as linear or branched poly(ethylene imine)s PEIs [LPEI or (BPEI)/oligo(acrylic acid)], (B) 3.0 µm inner layer containing 85 % by weight of polypropylene, 15 % by weight of TiO₂ white pigment, (C) 30 µm core layer containing 85 % by weight of polypropylene homopolymer, 15 % by weight of CaCO₃ cavitating masterbatch, (D) 3.0 µm inner layer containing 95 % by weight of polypropylene, 5 % by weight of TiO₂ white pigment and (E) 1.0 µm surface corona treated outer layer containing 100 % by weight of polypropylene or poly(ethylene-co-propylene-co-butylene) terpolymer. Before biaxially stretching and in-line coated, skin layer (A) has twice corona or flame treatments in order to provide the better adhesion between polypropylene based matrix polymer surface and acrylic based in-line coated system. Outer layer (E) as also corona or flame treatment for further printing and labelling proposes. The film prepared by using the flat tenter twin-screw extrusion system with excellent mixing and simultaneous or sequential stretching capacity, supplied with a chilled corona and an improved in-line coating system for the effective surface modification/hydrophilization of films, three or four satellite co-extruders, flat die, chill roll, water vaporization and recycling lines.

### EXAMPLE 3

A third example of a in-line surface coated multilayer film comprises the same thickness structure and composition as in Example 1 with the following changes: the in-line coated skin layer (A) having 1.0 µm thickness comprises 10 % by weight of mixture of crosslinkable copolymers maleic anhydride and ionic antistatic agent on the base of the complexed binary systems such as linear or branched poly(ethylene imine) (LPEI or BPEI/oligo(acrylic acid) having average molecular weight (Mn) which is equal to or greater than 480 g/mol or 2000 g/mol, respectively.

### EXAMPLE 4 - disclosing a product outside the scope of protection of the present invention for better understanding of the field

A fourth example of a in-line surface coated multilayer film comprises the same thickness structure and composition as in Example 1 with the following changes: the in-line coated skin layer (A) comprises 10 % by weight of mixture of PEIs/water soluble copolymers of maleic anhydride with equivalent amine/carboxylic acid unit ratio having average molecular weight (Mn) which is equal to or greater than 10000 g/mol.

### EXAMPLE 5 - disclosing a product outside the scope of protection of the present invention for better understanding of the field

A fifth example of a in-line surface coated multilayer film comprises the same thickness structure and composition as in Example 1 with the following changes: the in-line coated skin layer (A) having 1.0 µm thickness comprises 10 % by weight of a mixture of PEIs/(meth)acrylic copolymer with equivalent amine/carboxylic acid unit ratio having average molecular weight (Mw) which is equal to or greater than 1500 g/mol.

### EXAMPLE 6 - disclosing a product outside the scope of protection of the present invention for better understanding of the field

A sixth example of a in-line surface coated multilayer film comprises the same thickness structure and composition as in Example 1 with the following changes: (A) 0.1 µm surface corona treated and in-line coated onto surface of 0.9 µm skin layer containing 90 % by weight of propylene homopolymer, 10 % by weight of mixture of acrylic matrix polymer and ionic antistatic agent on the base of the complexed binary systems such as linear or branched poly(ethylene imine)s PEIs [LPEI or (BPEI)/oligo(acrylic acid)], the core layer (C) having 24 µm thickness comprises 85 % by weight of propylene homopolymer and 15 % by weight of TiO₂ white pigment. E) 1.0 µm surface corona treated outer layer containing 100 % by weight of polypropylene or poly(ethylene-co-propylene-co-butylene) terpolymer.

### COMPARATIVE EXAMPLE

A comparative example of a in-line coated multilayer film (A/B/C/D/E) having excellent antistatic properties comprises: (A) 1,0 µm skin layer containing 98,5 % by weight of propylene homopolymer and 1,5 % by weight of polypropylene based antiblocking masterbatch (containing 5 % silica based inorganic additive) (B) 2.0 µm inner layer containing 100 % by weight of polypropylene, (C) 22.0 µm core layer containing 98 % by weight of polypropylene and 2 % by weight of polypropylene based antistatic masterbatch (containing 15 % ethoxylated amine additive), (D) 2.0 µm inner layer containing 100 % by weight of polypropylene, (E) 1.0 µm surface corona treated outer layer containing 97,5 % by weight of polypropylene and 2,5 % by weight of polypropylene based antiblocking masterbatch (containing 5 % silica based inorganic additive). Before biaxially stretching and in-line coated, skin layer (A) has twice corona or flame treatments in order to provide the better adhesion between polypropylene based matrix polymer surface and acrylic based in-line coated system. Outer layer (E) is also corona or flame treated for further printing and labeling purposes. The film prepared by using the flat tenter twin-screw extrusion system with excellent mixing and simultaneous or sequential stretching capacity, supplied with a chilled corona and three or four satellite co-extruders, flat die, chill roll, water vaporization and recycling lines.

**TABLE 1**

| Compositions for inline coated films | | | | | | | |
|---|---|---|---|---|---|---|---|
| Individual Components | Ex-1 | Ex-2 | Ex-3 | Ex-4 | Ex-5 | Ex-6 | Comparative film |
| | Content (wt. %) | Content (wt. %) | Content (wt. %) | Content (wt. %) | Content (wt. %) | Content (wt. %) | Content (wt. %) |
| Isotactic polypropylene (homopolymer) | 99,635 | 85,334 | 99,635 | 99,635 | 99,635 | 84,926 | 99,745 |
| Poly[propylene-coethylene(1.2-5.4%)-co-1-butene(2.8-14.6%)] | 0,000 | 5,000 | 0,000 | 0,000 | 0,000 | 6,333 | 0,000 |
| Calcium carbonate -cavitating agent | 0,000 | 8,289 | 0,000 | 0,000 | 0,000 | 0,000 | 0,000 |
| Titanium dioxide -white pigment | 0,000 | 1,105 | 0,000 | 0,000 | 0,000 | 8,400 | 0,000 |
| Tetrakis methane -antioxidant | 0,004 | 0,004 | 0,004 | 0,004 | 0,004 | 0,004 | 0,004 |
| Aryl phosphide -stabilizer | 0,004 | 0,004 | 0,004 | 0,004 | 0,004 | 0,004 | 0,004 |
| Silica based Antiblocking agent | 0,000 | 0,000 | 0,000 | 0,000 | 0,000 | 0,000 | 0,007 |
| Ethoxylated amine based additive | 0,000 | 0,000 | 0,000 | 0,000 | 0,000 | 0,000 | 0,240 |
| Coating Material 1 | 0,357 | 0,263 | 0,000 | 0,000 | 0,000 | 0,333 | 0,000 |
| Coating Material 2 | 0,000 | 0,000 | 0,357 | 0,000 | 0,000 | 0,000 | 0,000 |
| Coating Material 3 | 0,000 | 0,000 | 0,000 | 0,357 | 0,000 | 0,000 | 0,000 |
| Coating Material 4 | 0,000 | 0,000 | 0,000 | 0,000 | 0,357 | 0,000 | 0,000 |
| Coating Material 1: Mixture of acrylic matrix polymer and ionic antistatic agent on the base of the complexed binary systems such as linear or branched poly(ethylene imine)s PEIs [LPEI or (BPEI)/oligo(acrylic acid)] | | | | | | | |
| Coating Material 2: mixture of crosslinkable copolymers maleic anhydride and ionic antistatic agent on the base of the complexed binary systems such as linear or branched poly(ethylene imine) (LPEI or BPEI/oligo(acrylic acid) having average molecular weight (*M*ₙ) which is equal to or greater than 480 g/mol or 2000 g/mol, respectively. | | | | | | | |
| Coating Material 3: mixture of PEIs/water soluble copolymers of maleic anhydride with equivalent amine/carboxylic acid unit ratio having average molecular weight (*M*ₙ) which is equal to or greater than 10000 g/mol. | | | | | | | |
| Coating Material 4: mixture of PEIs/(meth)acrylic copolymer with equivalent amine/carboxylic acid unit ratio having average molecular weight (*M*_{w}) which is equal to or greater than 1500 g/mol. | | | | | | | |

**TABLE 2**

| Layer component compositions for various types multilayer BOPP films | | | | | | | |
|---|---|---|---|---|---|---|---|
| **Layers** | **EXAMPLE -1** | **EXAMPLE-2** | **EXAMPLE-3** | **EXAMPLE-4** | **EXAMPLE - 5** | **EXAMPLE-6** | **COMPARATIVE FILM** |
| | **(28 µm)** | **(38 µm)** | **(28 µm)** | **(28 µm)** | **(28 µm)** | **(30 µm)** | **(28 µm)** |
| | **In-line coated non-heat sealable BOPP film** | **In-line coated cavitated opaque BOPP film** | **In-line coated non-heat sealable BOPP film** | **In-line coated non-heat sealable BOPP film** | **In-line coated non-heat sealable BOPP film** | **White heat sealable BOPP film** | **Non-heat sealable BOPP film** |
| Skin layer | Homopolymer 90 % | Terpolymer 90 % | Homopolymer 90 % | Homopolymer 90 % | Homopolymer 90 % | Terpolymer 90 % | Homopolymer 98,5 % |
| | Coating Material 1 10 % | Coating Material 1 10 % | Coating Material 2 10 % | Coating Material 3 10 % | Coating Material 4 10 % | Coating Material 1 10 % | Antiblocking masterbatch 1,5 % |
| | (Thickness: 1 µm) | (Thickness: 1 µm) | (Thickness: 1 µm) | (Thickness:) 1 µm) | (Thickness: 1 µm) | (Thickness: 1 µm) | (Thickness: 1 µm) |
| Inner layer | | Homopolymer 85 % | | | | | |
| | Homopolymer 100 % | White (TiO₂) Masterbatch15 % | Homopolymer 100 % | Homopolymer 100 % | Homopolymer 100 % | Homopolymer 100 % | Homopolymer 100 % |
| | (Thickness: 2 µm) | (Thickness: 3 µm) | (Thickness: 2 µm) | (Thickness: 2 µm) | (Thickness: 2 µm) | (Thickness: 2 µm) | (Thickness: 2 µm) |
| Core layer | Homopolymer 100 % | Homopolymer 85 % | Homopolymer 100 % | Homopolymer 100 % | Homopolymer 100 % | Homopolymer 85 % | Homopolymer 98 % |
| | (Thickness: 22.0 µm) | Cavitation(CaCO₃) Masterbatch 15 % | (Thickness: 22.0 µm) | (Thickness: 22.0 µm) | (Thickness : 22.0 µm) | White (TiO₂) Masterbatch 15% | Antistatic masterbatch 2 % |
| | | (Thickness: 30 µm) | | | | (Thickness: 24.0 µm) | (Thickness: 22.0 µm) |
| Inner layer | | Homopolymer 95 % | | | | | |
| | Homopolymer 100 % | White (TiO₂) Masterbatch 5 % | Homopolymer 100 % | Homopolymer 100 % | Homopolymer 100 % | Homopolymer 100 % | Homopolymer 100 % |
| | (Thickness: 2 µm) | (Thickness: 3 µm) | (Thickness: 2 µm) | (Thickness: 2 µm) | (Thickness: 2 µm) | (Thickness: 2 µm) | (Thickness: 2 µm) |
| Outer layer | Homopolymer 100 % | Terpolymer 100 % | Homopolymer 100 % | Homopolymer 100 % | Homopolymer 100 % | Terpolymer 100 % | Homopolymer 97,5 % |
| | (Thickness: 1 µm) | (Thickness: 1 µm) | (Thickness: 1 µm) | (Thickness: 1 µm) | (Thickness: 1 µm) | (Thickness: 1 µm) | Antiblocking masterbatch 2,5 % (Thickness: 1 µm) |
| | Surface treatment: Corona or Flame Treatment | Surface treatment: Corona or Flame Treatment | Surface treatment: Corona or Flame Treatment | Surface treatment: Corona or Flame Treatment | Surface treatment: Corona or Flame Treatment | Surface treatment: Corona or Rame Treatment | Surface treatment: Corona or Flame Treatment |

The surface skin layer thickness of maleic based antistatic in-line coated film developed in this invention is equal to or greater than 0.8 µm thick, the thickness of coating which is inline coated is equal to or lower than 0.5 µm as in the examples 1 to 6.

An aspect of the present disclosure is the possibility of production of the films in the form of mono-oriented and biaxially oriented polyolefin, preferably polypropylene based mono or multilayered films having at least of one surface coated with antistatic adhesive layer by using a combination of
a) a flat tenter twin-screw extrusion system with excellent mixing and simultaneous or sequential stretching capacity, one main extruder with three or four satellite co-extruders, flat die, chill roll and water bath, machine direction and transverse direction orientation units, recycling line, corona and/or flame treatment units, winding unit.
b) an in-line coater system supplied with tension rollers, gravure roller, double chilled corona units and water vaporization line for the effective surface modification/hydrophilization and to significantly improve antistatic and wetting tension properties of films.

Flat tenter extrusion film line is the one which produce conventional biaxially oriented polypropylene films with an industrially acceptable properties. However, this technology does not allow to produce films having improved and long-lasting slipperness, antistatic, wetting tension, optical properties and the like. With the use of conventional migratory additive containing masterbatches mentioned properties confronts to change upon aging and exploitation periods.

According to present disclosure, improved version of in-line coating system developed and integrated into standard flat tenter biaxially oriented polypropylene processing and manufacturing line with realizing the following important changes in in-line coating processing;
1) Taking into consideration that polypropylene surfaces are hydrophobic with intrinsic lower wetting tension values (29-31 dynes/cm) compared with polyester surfaces with intrinsically higher wetting tension levels (40-42 dynes/cm) which are widely used in in-line coating technology, double chilled corona units are adopted into the in-line coating system to be sure that wetting tension level of polypropylene film surface is adequate enough to enable water based coatings to be adhered on the surface.
2) In the standard BOPP production process, the tension between MDO and TDO is precisely controlled to avoid film breaks and non-quality production. While the in-line coating unit between them leads to tension increase and unprecise tension control. So the new bearing system of the last MDO rolls changed and a new control system is supplied into the system in order to achieve the precise tension control.
3) It is well known that polypropylene structures have lower heat resistance properties compared with polyester structures. Hence, corona treatment systems in BOPP film manufacturing processes, the heat generated during electrical corona discharge unit should be compensated by cooling rollers. Since the corona power used in in-line coating system is high which is about 30-40 kW, the corona rolls adopted to in-line coating system are cooled by additional refrigeration system in order to avoid overheating of the film.
4) It is also well known that one of the most important parameter in in-line coating system is to get a homogeneous and even coating thickness distribution of the coating all along the web since coated MDO stretched film have to be TDO stretched between 1:8 to 1:10, the thickness of coatings has to be controlled in a very sensitive controlling unit. Therefore, new coating thickness controlling unit using ®-gauge or X-ray system is mounted into in-line coating system.
5) The gravure pattern for polyester and polypropylene are different for each substrate. For the film of the present invention, different cell angle, line (cell number/in2) and cell volume depending on the composition and concentration of the coating material are used in in-line coating process.
6) The drier, in this case the TDO preheating section, must have enough thermal capacity in order to dry and remove the water from coated film. To achieve the desired drying temperature of 180-190 °C (with in-line coating) instead of 160 - 170 °C (for standard production without coating), the thermal capacity of the TDO preheating section is increased.

According to the present disclosure, the developed technological aspects of producing and processing the said films are:
a) mono or multilayered biaxially oriented polypropylene film technology,
b) a flat tenter twin-screw extrusion system with excellent mixing and simultaneous or sequential stretching capacity, one main extruder with three or four satellite co-extruders, flat die, chill roll and water bath, machine direction and transverse direction orientation units, recycling line, corona and/or flame treatment units, winding unit
c) an in-line coater system supplied with tension rollers, gravure roller, double chilled corona units and water vaporization line for the effective surface modification/hydrophilization and to significantly improve antistatic and wetting tension properties of films.

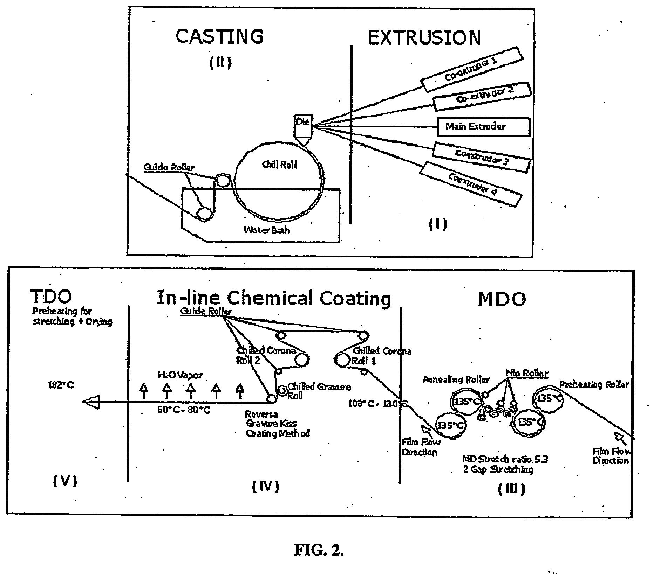

Alternatively the (E) outer layer of biaxially oriented films prepared may be treated in a known manner such as plasma or flame or more preferably, by electrical corona discharge. General scheme for the technology of production and improved processing of films are represented in Fig.2.

Another aspect of the present invention is to use new systems of functional copolymers using as a basic polymers, i.e., water-soluble anhydride-containing copolymers and their PEI macrocomplexes in the compositions of surface coatings and polymeric antistatic agents; linear and branched PEIs have the following average characteristics: average molecular weight *M*ₙ = 425 g/mol, viscosity η = 200 cP at 25 °C and density *d* = 1.07 g/cm³ (for linear PEI) and *M*ₙ = 1800, *M*_{w} = 2000 g/mol and density *d* = 1.08 g/cm³ (for branched PEI). Used anhydride-containing copolymers and (meth)acrylic acid homo- and copolymers easily crosslinked by poly(ethylene glycol) (PEG) in the aqueous medium at 85-110 °C without any catalyst and at room temperature in the presence of carbamide type water-soluble catalyst (as in Devrim Y., Rzaev Z. M. O. et al. Macromol. Chem. Phys. 2007;208:175). Physical state of used PEGs are changed from liquid to powder crystalline; having the different molecular weights (*M*ₙ = 200, 420, 950 and 8000 g/mol) are used as a crosslinker, intermolecular linkages of which also improved antistatic properties of films. Both the said crosslinkable copolymer systems and hyperbranched copolymer/PEIs macrocomplexes (Fig. 1) exhibit better film-forming properties and excellent antistatic activity, respectively. The conventional acrylic adhesives can also be integrated to be used in the in-line surface coating process.

It is further object of the present invention to widen the field of application of said coated films useful for the conventional applications including food and non-food industry such as food packaging, agriculture, industrial wrapping applications, medicine, pharmacy, electrical and electronical material industry, and the like.

Some important properties of films prepared according to the present invention are summarized in Table 3.

**TABLE 3**

| Physical and Mechanical Characteristics and surface properties of multilayer BOPP films | | | | | | | | | | |
|---|---|---|---|---|---|---|---|---|---|---|
| **Test Method** | **Parameters** | **UNIT** | | **EXAMPLE-1 (28 µm) In-line coated non-heat sealable BOPP film** | **EXAMPLE-2 (38 µm) In-line coated cavitated opaque BOPP film** | **EXAMPLE-3 (28 µm) In-line coated non-heat sealable BOPP film** | **EXAMPLE-4 (28 µm) In-line coated non-heat sealable BOPP film** | **EXAMPLE-5 (28 µm) In-line coated non-heat sealable BOPP film** | **EXAMPLE-6 (30 µm) White heat sealable BOPP film** | **COMPARATIVE FILM (28 µm) Non-heat sealable BOPP film** |
| ASTM D 374 | Thickness | µm | | 28 | 38 | 28 | 28 | 28 | 30 | 28 |
| ASTM D 4321 | Yield | m²/kg | | 39,2 | 39,3 | 39,2 | 39,2 | 39,2 | 34 | 39,2 |
| ASTM D 1505 | Density | g/cm³ | | 0,91 | 0,67 | 0,91 | 0,91 | 0,91 | 0,98 | 0,91 |

| SURFACE & OPTICAL PROPERTIES | | | | | | | | | | |
|---|---|---|---|---|---|---|---|---|---|---|
| ASTM D 2578 | Wetting Tension | dynes/cm | | 42 | 42 | 42 | 42 | 42 | 42 | 38 |
| ASTM D 257 | Static decay time | seconds | | 0* | 0* | 0* | 0* | 0* | 0* | 195** |
| ASTM D 1003 | Haze | % | | 0,4 | - | 0,4 | 0,4 | 0,4 | - | 1,6 |
| ASTM D 2457 | Gloss | % | | 100 | 90 | 100 | 100 | 100 | 55 | 85 |
| DIN 53146 | Opacity | % | | - | 75 | - | - | - | 65 | - |
| ASTM D 1746 | Light Transmission | % | | - | 30 | - | - | - | 35 | - |

| MECHANICAL & THERMAL PROPERTIES | | | | | | | | | | |
|---|---|---|---|---|---|---|---|---|---|---|
| ASTM D 882 | Tensile Strength | N/mm² | MD | 165 | 79 | 173 | 169 | 172 | 148 | 166 |
| | | | TD | 298 | 137 | 287 | 293 | 305 | 227 | 306 |
| ASTM D 882 | Elongation at Break | % | MD | 155 | 98 | 167 | 162 | 174 | 166 | 159 |
| | | | TD | 58 | 40 | 62 | 59 | 55 | 63 | 59 |
| ASTM D 2732 | Thermal Shrinkage | % | MD | 4 | 3 | 4 | 4 | 4 | 3 | 4 |
| | | | TD | 2 | 1 | 2 | 2 | 2 | 2 | 2 |
| ASTM F 88 | Heat seal range | ° C | - | - | - | - | - | - | 105-145 | - |
| * 0 means electrostatic charging on coated film surface immediately discharged and no static build up on the surface. Same values are taken after production and after 10 days aging time. | | | | | | | | | | |
| ** comparative film includes migratory antistatic agent and this value is taken after 10 days aging time. | | | | | | | | | | |

The examples and the comparative film have tested regarding the wetting tension and adhesion quality towards water based and UV based inks since both ink systems are widely used in industry and standard BOPP films suffers to have adequate adhesion towards these ink systems.

| **Table - 4** | | | | |
|---|---|---|---|---|
| **Ink Adhesion Test Results (Ink adhesion: 1-5, with "5" being best adhesion)** | | | | |
| **Film Type** | **WB FLEXO INK** | | **UV FLEXO INK** | |
| | Immediately | 24 hours | Immediately | 24 hours |
| Example - 1, 2 and 6 | 5 | 5 | 1 | 1 |
| Example - 3 | 4 | 5 | 1 | 2 |
| Example - 4 | 4 | 5 | 1 | 1 |
| Example - 5 | 4 | 5 | 1 | 1 |
| Comparative Film | 2 | 3 | 0 | 0 |

| **Film Type** | **UV OFFSET INK** | | **UV LETTERPRESS INK** | |
|---|---|---|---|---|
| | Immediately | 24 hours | Immediately | 24 hours |
| Example - 1, 2 and 6 | 4 | 4,5 | 3 | 3,5 |
| Example - 3 | 3 | 4 | 2 | 2,5 |
| Example - 4 | 4 | 4 | 3 | 3 |
| Example - 5 | 3 | 3,5 | 2 | 3 |
| Comparative Film | 1 | 3 | 1 | 1,5 |

Another aspect of the present invention is to use the various combinations of the organic and inorganic additives to make possibility of producing different types of polypropylene based mono or multilayer biaxially oriented and surface coated films such as transparent non-heat sealable, transparent non-heat sealable for labels, white cavitated non-heat sealable, white cavitated heat sealable, and the like using above described improved version of production and processing technology mono or multilayered and surface coated antistatic thin films including chemical surface modification of films by in-line coated method.

Advantages of maleic based antistatic films disclosed in this present invention and their manufacturing and processing technology are:
(1) assembled structure of macrocomplexes with higher degree of positive charges in macromolecules is provided excellent antistatic properties during the long exploitation time with combination of other important properties of films such as slipperness, antiblocking, improved wetting tension, adhesion to cold seal and to different lamination adhesive types, etc.,
(2) all the disclosed functional polymer components in the surface coated compositions related to class of water-soluble bioengineering polymer systems, and therefore, production and processing technology of films is green-chemical technology,
(3) improved technology of coated processing allows to apply this method to manufacture of a wide range of polyolefin based mono or multilayer biaxially oriented films and their laminates with various polar thermoplastics and thermosets,
(4) possibility to widen the field of conventional applications. The disclosed films are also useful for the special application as a new generation of antibacterial and antifogging films due to high positively charged surface of films.

The maleic based antistatic in-line coated film developed in this invention may be antibacterial or anti- fogging or antimicrobial or degradable or biodegradable or low SIT or their combination.

The developed maleic based antistatic in-line coated film may be mono layer biaxially oriented polypropylene (BOPP) based film comprising: a single layer with a polypropylene or the mixture of polypropylene with poly (ethylene-co-propylene) copolymer or poly(ethylene-co-propylene-co-butylene) terpolymer and in-line surface coated thin antistatic layer.

## Claims

1. An maleic based antistatic in-line coated multilayered biaxially oriented polypropylene (BOPP) based film comprising:
• a skin layer comprising a polypropylene or the mixture of polypropylene with poly(ethylene-co-propylene) copolymer or poly(ethylene-co-propylene-co-butylene) terpolymer and an in-line surface coated thin antistatic layer;
wherein the in-line surface coated thin antistatic layer comprises a mixture of:
(1) crosslinkable copolymers of maleic anhydride
and
(2) ionic antistatic agent on the base of the complexed binary systems which are chosen from
linear or branched poly(ethylene imine) (PEIs)/ oligo(acrylic acid),
PEIs /(meth)acrylic copolymers, and
PEIs/water soluble copolymers of maleic anhydride with different comonomers
• two inner layers between the skin layer and the core layer and between the core and the outer layer, comprising a polypropylene or the mixture of polypropylene with poly(ethylene-*co*-propylene) copolymer or poly(ethylene-*co*-propylene-*co*-butylene) terpolymer,
• a core layer between two said inner layers, comprising polypropylene,
• a treated outer layer comprising a polypropylene or poly(ethylene-*co-*propylene) copolymer or poly(ehylene-*co*-propylene-*co*-butylene) terpolymer.

2. The maleic based antistatic in-line coated film according to claim 1, wherein the different comonomers are chosen from ethylene, propylene, N-isopropylacrylamide, and N-vinyl-2-pyrrolidone.

3. The maleic based antistatic in-line coated film according to claim 1, wherein the at least one antistatic coated thin layer further comprises a conventional acrylic adhesive and a special antistatic polymeric additive selected from the groups consisting of polymeric complex-forming mixture of homo- or copolymers of (meth)acrylic acid or hydrolyzed alternating copolymer of maleic anhydride and of linear or branched poly(ethylene imine) with equivalent amine/carboxylic acid unit ratio.

4. The maleic based antistatic in-line coated film according to claim 1, wherein the at least one antistatic coated thin layer further comprises a special adhesive composition selected from groups consisting of water-soluble alternating copolymer of maleic anhydride with α-olefins preferably ethylene and propylene and functional comonomers preferably N-isopropyl acrylamide, N-vinyl-2-pyrrolidone, and like, poly(ethylene glycol) as a crosslinker and a water-soluble catalyst, preferably a carbamide type catalyst.

5. The maleic based antistatic in-line coated film according to claim 1, wherein the thickness of coating which is inline coated is equal to or lower than 0.5 µm thick.

6. The maleic based antistatic in-line coated film according to claim 1, wherein the coating which is inline coated comprises a homopolymer or copolymer of (meth)acrylic acid having average molecular weight (M_{w}) which is equal to or greater than 1500 g/mol.

7. The maleic based antistatic in-line coated film according to claim 1, wherein the coating which is inline coated comprises an alternating copolymer of maleic anhydride having average molecular weight (Mₙ) which is equal to or greater than 10000 g/mol.

8. The maleic based antistatic in-line coated film according to claim 1, wherein the coating which is inline coated comprises a linear or branched poly(ethylene imine) having average molecular weight (Mₙ) which is equal to or greater than 480 g/mol or 2000 g/mol, respectively.

9. The maleic based antistatic in-line coated film according to claim 1, wherein the coating which is inline coated comprises a poly(ethylene glycol) crosslinker having average molecular weight (Mₙ) which is equal to or greater than 420 g/mol.

10. The maleic based antistatic in-line coated film according to claim 1, wherein the surface skin layer thickness which is coated by in-line coating technique is equal to or greater than 0.8 µm thick.

11. The maleic based antistatic in-line coated film according to claim 1, wherein the treated outer layer comprises silica and/or organic antiblocking additives and slip/antistatic additives.

12. The maleic based antistatic in-line coated film according to claim 1, wherein the inner layers and core layer comprises TiO₂ white masterbatch, slip/antistatic masterbatch and CaCO₃ masterbatch for producing a solid white or white cavitated BOPP film.

13. The maleic based antistatic in-line coated film according to claim 1, wherein the treated outer layer have been corona or flame or plasma treated.

## Patentansprüche

1. Auf Maleinsäure basierender, antistatischer, inline-beschichteter, mehrschichtiger Film auf Basis von biaxial ausgerichtetem Polypropylen (BOPP), umfassend:
- eine Deckschicht, die ein Polypropylen oder die Mischung von Polypropylen mit Poly(ethylen-co-propylen)-Copolymer oder Poly(ethylen-co-propylen-co-butylen)-Terpolymer und eine inline-oberflächenbeschichtete dünne antistatische Schicht umfasst;
wobei die inline-oberflächenbeschichtete dünne antistatische Schicht eine Mischung von Folgendem umfasst:
(1) Vernetzbaren Copolymeren von Maleinsäureanhydrid und
(2) ionischem antistatischem Mittel auf der Basis der komplexierten binären Systeme, die ausgewählt sind aus
linearem oder verzweigtem Poly(ethylenimin) (PEI) / Oligo(acrylsäure),
PEI /(Meth)acrylsäure-Copolymeren, und
PEI/wasserlöslichen Copolymeren von Maleinsäureanhydrid mit verschiedenen Comonomeren
- zwei innere Schichten zwischen der Deckschicht und der Kernschicht und zwischen dem Kern und der äußeren Schicht, umfassend ein Polypropylen oder die Mischung von Polypropylen mit Poly(ethylen-co-propylen)-Copolymer oder Poly(ethylen-co-propylen-co-butylen)-Terpolymer,
- eine Kernschicht zwischen den zwei inneren Schichten, umfassend Polypropylen,
- eine behandelte äußere Schicht, die ein Polypropylen oder Poly(ethylen-co-propylen)-Copolymer oder Poly(ethylen-co-propylen-co-butylen)-Terpolymer umfasst.

2. Auf Maleinsäure basierender antistatischer inline-beschichteter Film nach Anspruch 1, wobei die verschiedenen Comonomere ausgewählt sind aus Ethylen, Propylen, N-Isopropylacrylamid und N-Vinyl-2-pyrrolidon.

3. Auf Maleinsäure basierender antistatischer inline-beschichteter Film nach Anspruch 1, wobei die mindestens eine antistatische beschichtete dünne Schicht ferner einen herkömmlichen Acrylklebstoff und einen speziellen antistatischen polymeren Zusatzstoff umfasst, der ausgewählt ist aus den Gruppen, bestehend aus polymerer komplexbildender Mischung von Homo- oder Copolymeren oder (Meth)acrylsäure oder hydrolysiertem alternierenden Copolymer von Maleinsäureanhydrid und von linearem oder verzweigtem Poly(ethylenimin) mit äquivalentem Amin-/Carbonsäure-Einheitsverhältnis.

4. Auf Maleinsäure basierender antistatischer inline-beschichteter Film nach Anspruch 1, wobei die mindestens eine antistatische beschichtete dünne Schicht ferner eine spezielle Klebstoffzusammensetzung umfasst, die ausgewählt ist aus den Gruppen, bestehend aus wasserlöslichem alternierendem Copolymer von Maleinsäureanhydrid mit α-Olefinen, vorzugsweise Ethylen und Propylen und funktionellen Comonomeren, vorzugsweise N-Isopropylacrylamid, N-Vinyl-2-pyrrolidon und dergleichen, Poly(ethylenglykol) als Vernetzungsmittel und einem wasserlöslichen Katalysator, vorzugsweise einem Carbamid-Katalysator.

5. Auf Maleinsäure basierender antistatischer inline-beschichteter Film nach Anspruch 1, wobei die Dicke der Beschichtung, die inline-beschichtet ist, gleich oder geringer als 0,5 µm dick ist.

6. Auf Maleinsäure basierender antistatischer inline-beschichteter Film nach Anspruch 1, wobei die Beschichtung, die inline-beschichtet ist, ein Homopolymer oder Copolymer von (Meth)acrylsäure mit einem durchschnittlichen Molekulargewicht (M_{w}) umfasst, das gleich oder größer als 1500 g/Mol ist.

7. Auf Maleinsäure basierender antistatischer inline-beschichteter Film nach Anspruch 1, wobei die Beschichtung, die inline-beschichtet ist, ein alternierendes Copolymer von Maleinsäureanhydrid mit einem durchschnittlichen Molekulargewicht (Mₙ) umfasst, das gleich oder größer als 10.000 g/Mol ist.

8. Auf Maleinsäure basierender antistatischer inline-beschichteter Film nach Anspruch 1, wobei die Beschichtung, die inline-beschichtet ist, ein lineares oder verzweigtes Poly(ethylenimin) mit einem durchschnittlichen Molekulargewicht (Mₙ) umfasst, das jeweils gleich oder größer als 480 g/Mol oder 2000 g/Mol ist.

9. Auf Maleinsäure basierender antistatischer inline-beschichteter Film nach Anspruch 1, wobei die Beschichtung, die inline-beschichtet ist, ein Poly(ethylenglykol)-Vernetzungsmittel mit einem durchschnittlichen Molekulargewicht (Mₙ) umfasst, das gleich oder größer als 420 g/Mol ist.

10. Auf Maleinsäure basierender antistatischer inline-beschichteter Film nach Anspruch 1, wobei die Dicke der Oberflächendeckschicht, die durch Inline-Beschichtungstechnik beschichtet ist, gleich oder mehr als 0,8 µm dick ist.

11. Auf Maleinsäure basierender antistatischer inline-beschichteter Film nach Anspruch 1, wobei die behandelte äußere Schicht Siliciumdioxid und/oder organische Antiblockier-Zusatzstoffe und Rutsch-/antistatische Zusatzstoffe umfasst.

12. Auf Maleinsäure basierender antistatischer inline-beschichteter Film nach Anspruch 1, wobei die inneren Schichten und Kernschicht ein weißes TiO₂-Masterbatch, Rutsch-/antistatisches Masterbatch und CaCO₃-Masterbatch zum Herstellen eines festen weißen oder weißen kavitierten BOPP-Films umfassen.

13. Auf Maleinsäure basierender antistatischer inline-beschichteter Film nach Anspruch 1, wobei die behandelte äußere Schicht corona- oder flamm- oder plasmabehandelt wurde.

## Revendications

1. Film à base de polypropylène à orientation bi-axiale (BOPP) multicouche revêtu en ligne d'antistatique à base de maléique comprenant :
• une couche de peau comprenant un polypropylène ou un mélange de polypropylène avec un copolymère poly-(éthylène-co-propylène) ou un terpolymère poly(éthylène-co-propylène-co-butylène) et une couche antistatique mince appliquée en ligne sur la surface ;
dans lequel la couche antistatique mince appliquée en ligne sur la surface comprend un mélange :
(1) des copolymères réticulables d'anhydride maléique et
(2) d'un agent antistatique ionique sur la base de systèmes binaires complexés qui sont choisis parmi un poly(éthylène imine) linéaire ou ramifié (PEI)/oligomère d'acide acrylique, des PEI/copolymères (méth)acryliques et des PEI/copolymères d'anhydride maléique solubles dans l'eau avec différents comonomères ;
• deux couches intérieures entre la couche de peau et la couche centrale et entre la couche centrale et la couche extérieure, comprenant un polypropylène ou un mélange de polypropylène avec un copolymère poly-(éthylène-co-propylène) ou un terpolymère poly(éthylène-co-propylène-co-butylène),
• une couche centrale entre deux desdites couches intérieures, comprenant du polypropylène,
• une couche extérieure traitée comprenant un polypropylène ou un copolymère poly(éthylène-co-propylène) ou un terpolymère poly(éthylène-co-propylène-co-butylène).

2. Film revêtu en ligne d'antistatique à base de maléique selon la revendication 1, dans lequel les différents comonomères sont choisis parmi l'éthylène, le propylène, le N-isopropylacrylamide et la N-vinyl-2-pyrrolidone.

3. Film revêtu en ligne d'antistatique à base de maléique selon la revendication 1, dans lequel la ou les couches minces revêtues d'antistatique comprennent en outre un adhésif acrylique classique et un additif polymère antistatique spécial, choisi dans le groupe constitué par un mélange, formant un complexe polymère, d'homo- ou de copolymères d'acide (méth)acrylique ou de copolymère alterné hydrolysé d'anhydride maléique et de poly(éthylène imine) linéaire ou ramifié avec un rapport unitaire amine/acide carboxylique equivalent.

4. Film revêtu en ligne d'antistatique à base de maléique selon la revendication 1, dans lequel la ou les couches minces revêtues d'antistatique comprennent en outre une composition adhésive spéciale choisie dans le groupe constitué par un copolymère alterné, soluble dans l'eau, d'anhydride maléique avec des α-oléfines, de préférence de l'éthylène et du propylène et des comonomères fonctionnels, de préférence N-isopropylacrylamide, N-vinyl-2-pyrrolidone, et analogues, un poly(éthylène glycol) en tant qu'agent de réticulation et un catalyseur soluble dans l'eau, de préférence un catalyseur de type carbamide.

5. Film revêtu en ligne d'antistatique à base de maléique selon la revendication 1, dans lequel l'épaisseur du revêtement qui est appliqué en ligne est inférieure ou égale à 0,5 µm.

6. Film revêtu en ligne d'antistatique à base de maléique selon la revendication 1, dans lequel le revêtement qui est appliqué en ligne comprend un homo-polymère ou un copolymère d'acide (méth)acrylique possédant une masse moléculaire moyenne (M_{w}) qui est supérieure ou égale à 1500 g/mol.

7. Film revêtu en ligne d'antistatique à base de maléique selon la revendication 1, dans lequel le revêtement qui est appliqué en ligne comprend un copolymère alterné d'anhydride maléique possédant une masse moléculaire moyenne (Mₙ) qui est supérieure ou égale à 10000 g/mol.

8. Film revêtu en ligne d'antistatique à base de maléique selon la revendication 1, dans lequel le revêtement qui est appliqué en ligne comprend un poly-(éthylène imine) linéaire ou ramifié possédant une masse moléculaire moyenne (Mₙ) qui est supérieure ou égale à 480 g/mol ou 2000 g/mol, respectivement.

9. Film revêtu en ligne d'antistatique à base de maléique selon la revendication 1, dans lequel le revêtement qui est appliqué en ligne comprend un agent de réticulation poly(éthylène glycol) possédant une masse moléculaire moyenne (Mₙ) qui est supérieure ou égale à 420 g/mol.

10. Film revêtu en ligne d'antistatique à base de maléique selon la revendication 1, dans lequel l'épaisseur de la couche de peau superficielle qui est appliquée par une technique de revêtement en ligne est supérieure ou égale à 0,8 µm.

11. Film revêtu en ligne d'antistatique à base de maléique selon la revendication 1, dans lequel la couche extérieure traitée comprend des additifs anti-adhérence de type silice et/ou organiques et des additifs de glissement/antistatiques.

12. Film revêtu en ligne d'antistatique à base de maléique selon la revendication 1, dans lequel les couches intérieures et la couche centrale comprennent un mélange maître de blanc de TiO₂, un mélange maître de glissement/antistatique et un mélange maître de CaCO₃ permettant de produire un film de BOPP blanc plein ou blanc alvéolé.

13. Film revêtu en ligne d'antistatique à base de maléique selon la revendication 1, dans lequel la couche extérieure traitée a subi un traitement corona ou à la flamme ou au plasma.
